Europäisches Patentamt

European Patent Office

Office européen des brevets

(11) Publication number: 0 403 088
A2

# EUROPEAN PATENT APPLICATION

(21) Application number: 90305496.3

(22) Date of filing: 21.05.90

(51) Int. Cl.5: H02M 3/337

(30) Priority: 15.06.89 GB 8913772

(43) Date of publication of application:
19.12.90 Bulletin 90/51

(84) Designated Contracting States:
DE ES FR GB IT

(71) Applicant: PLESSEY AEROSPACE LIMITED
Vicarage Lane
Ilford, Essex, IG1 4AQ(GB)

(72) Inventor: Beddoe, Stanley
6 Martin Avenue
Stubbington, Fareham, Hants(GB)

(74) Representative: Waters, Jeffrey
The General Electric Company plc Central
Patent Department Marconi Research Centre
West Hanningfield Road
Great Baddow Chelmsford Essex CM2
8HN(GB)

(54) Improvements relating to DC-DC converters.

(57) A regulated switch mode DC-DC converter comprises a logic gate package connected to a DC power supply and providing four NOR logic gates. Two of the NOR gates are connected for providing an oscillator circuit producing one or more AC outputs which are applied to the inputs of the other respective NOR gates which act as driver gates for power transistor means. The power transistor means conducts intermittently in order to provide from a DC power supply a regulated current which may be fed to the primary of a de-coupling or isolating transformer the secondary of which feeds a rectifier circuit which provides a DC regulated output. The ON/OFF periods of the power transistor means are controlled by control means in order to provide the requisite regulation of the DC output of the converter.

EP 0 403 088 A2

## IMPROVEMENTS RELATING TO DC-DC CONVERTERS

This invention relates to DC-DC converters and relates more particularly to such converters for providing regulated switch mode DC supplies preferably affording isolation between the power supplies and load circuits.

The present invention is especially, but not exclusively, concerned with the provision of regulated switch mode isolated power supplies in circuits of the kind described in our co-pending Patent Application No. 8825438.8 (F20596).

One primary objective of the invention is to provide DC-DC convertors of relatively simple and cheap construction affording switch mode regulation of the convertor output.

According to the present invention there is provided a regulated switch mode DC-DC converter comprising a logic gate package connected to a DC power supply and providing four NOR logic gates, in which two of the NOR gates are connected for providing an oscillator circuit producing one or more AC outputs which are applied to the inputs of the other respective NOR gates which act as driver gates for power transistor means which conducts intermittently in order to provide from DC power supply regulated current which may be fed to the primary of a de-coupling or isolating transformer the secondary of which feeds a rectified circuit which provides a DC regulated output, and in which the ON/OFF periods of the power transistor means are controlled by control means in order to provide the requisite regulation of the DC output of the converter.

In carrying out the present invention the oscillator circuit may provide two AC outputs in antiphase which are applied to the inputs of two NOR gates the outputs from which drive to power transistors which conduct alternately.

Regulation of the DC-DC converter by controlling initiation of the switching points of the power transistors and thus the ON/OFF periods of the converter may be achieved by controlling the charge on capacitors connected to respective inputs of the NOR gates controlling the switching points of the power transistors.

The present invention enables a standard volume-produced low- cost logic gate package to be used which effectively produces the requisite ON/OFF period or mark-space ratio and provides driver for the power transistor stage of the converter.

Moreover, the present invention avoids the use of high power loss linear regulators connected in series with unregulated DC-DC converters in order to achieve regulation. Known switch mode regulated power circuits are complex and expensive due to the use of specialised components and although high efficiencies are achieved on load, off-load losses may be too high for applications in which off-load losses are important. When electrical isolation by the use of transformers is required the costs of the switch mode regulated DC-DC converter become even higher.

By way of example the present invention will now be described with reference to the accompanying drawings in which:

Figure 1 is a circuit diagram of a switch mode regulated DC-DC converter according to the invention;

Figure 2 shows a NOR gate of the form embodied in the converter of Figure 1 and a truth table therefor; and,

Figure 3 shows the gate output voltage and collector current pulses of power switches in the converter circuit of Figure under various load/voltage conditions.

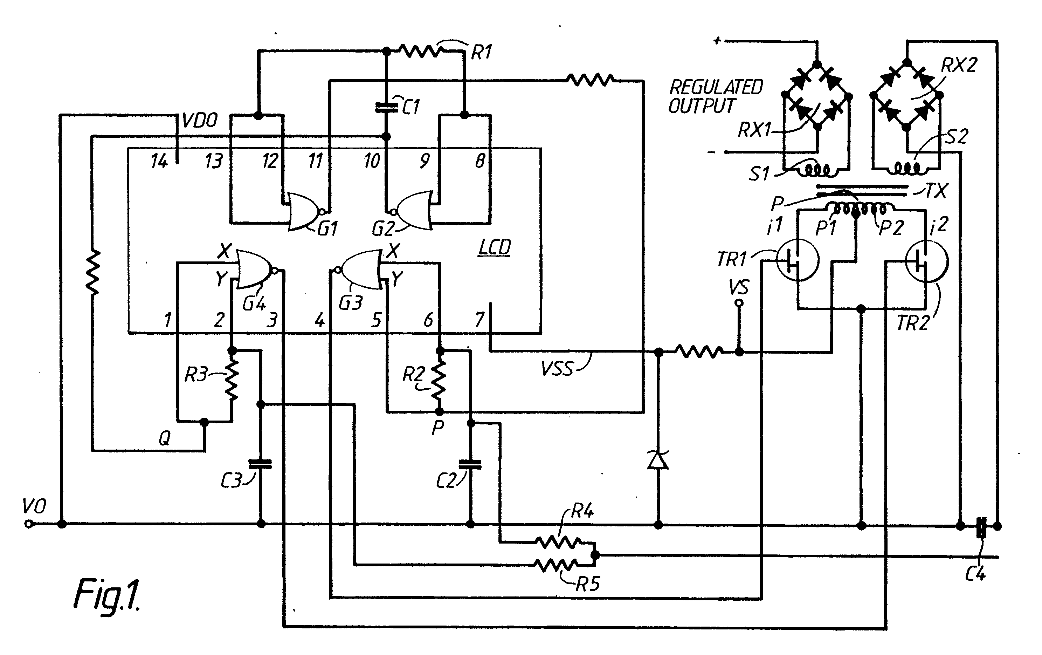

Referring to Figure 1 of the drawing the switch mode regulated DC-DC converter illustrated comprises a standard volume-produced relatively low cost logic circuit device LCD providing four NOR logic gates G1, G2, G3 and G4. The two NOR gates G1 and G2 are connected with a resistor R1 and capacitor C1 in order to provide an oscillator circuit having an operating frequency of between 10 to 500 KHz dependent upon the values of the resistor R1 and the capacitor C1.

The two outputs from the oscillator circuit at points P and Q are of similar form but in antiphase. These anti-phase outputs are applied directly to inputs X of respective NOR gates G3 and G4 and through resistors R2 and R3 to the other inputs Y of the two gates.

The DC battery input to the converter to be regulated which may, in the case of aircraft power supplies vary between 16 to 32 volts, is applied to terminals VS and VO (e.g. earth ). The potential at terminal VO is applied to the logic circuit device LCD and the emitters of two power transistors TR1 and TR2 whilst the positive voltage at terminal VS is applied to the collectors of the transistors TR1 and TR2 through respective parts P1 and P2 of a centre-tapped primary winding P of an isolating transformer TX. The transformer TX has two isolated secondary windings S1 and S2 having full-wave rectifier circuits RX1 and RX2 connected there across. The DC output from the rectifier circuit RX2 comprises a feedback voltage and is applied through resistors R4 and R5 to capacitors C2 and C3, with a smoothing capacitor C4 being connected across the output. The DC output from the other rectifier RX1 constitutes the regulated output from the converter. The outputs Z from the NOR gates G3 and G4 are connected to the bases of the respective power transistors TR1 and TR2.

It will be seen that the voltage VO applied to the emitters of the transistors TR1 and TR2 is also applied to the capacitors C2 and C3 connected to the inputs Y of the gates G3 and G4.

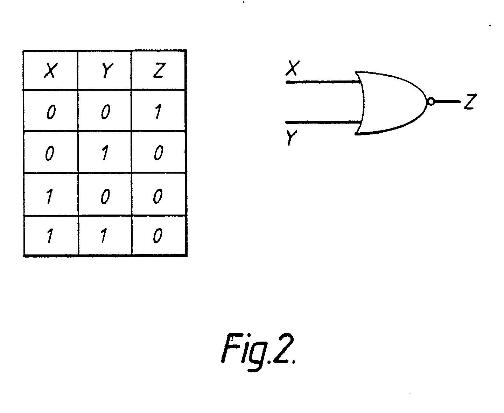

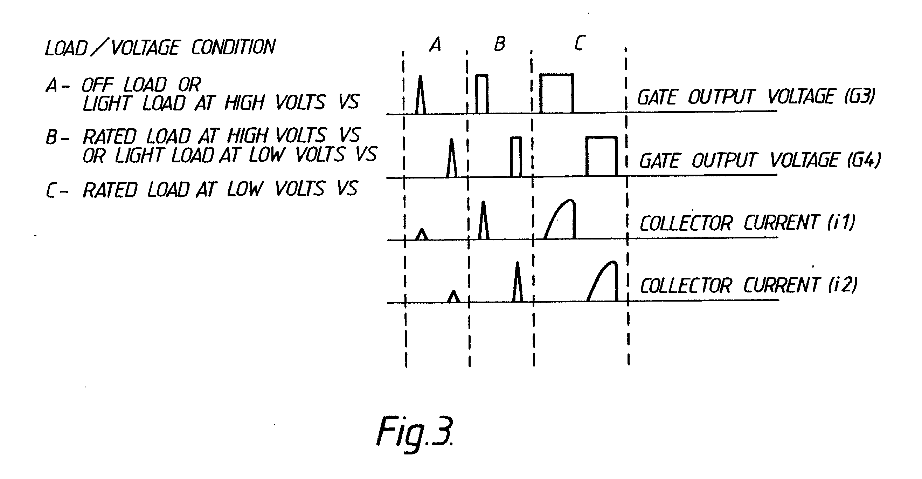

In order to switch on the power transistors TR1 and TR2 a positive (i.e. logic 1) output is required from both of the gates G3 and G4. By referring to the truth table shown in Figure 2 it will be seen that a logic 1 output requires logic 0 inputs at both inputs X and Y to the NOR gates.

The oscillator outputs P and Q will cause the logic inputs to the gates G3 and G4 to change from logic 1 to logic 0 and vice versa. However, in the present embodiment the application of logic 1 or logic 0 signals to the inputs Y of the gates G3 and G4 will be delayed in dependence upon the charged state of the capacitors C2 and C3. The charged state of the capacitors C2 and C3 is in turn dependent upon the voltage V sand and the output voltage from the rectifier bridge RX2 and the load connected to the rectifier bridge RX1. Thus the discharge time for the capacitors C2 and C3 when the oscillator outputs at P and Q are alternately logic 0 will depend upon the charged state of the capacitors C2 and C3. This discharge time determines when both of the inputs X and Y become logic 0 in order to produce a logic 1 output at outputs Z of the gates G3 and G4 so as to switch on the power transistors TR1 and TR2. The power transistors switch on alternately and, in so doing, the circuits for the energisation of the respective parts P1 and P2 of the transformer primary winding P of the isolating transformer TX are closed.

Referring to Figure 3 of the drawings this demonstrates how the mark-space ratios of the output voltage pulses from the gates G3 and G4 vary in dependence upon the load connected to the rectifier RX1 and the voltage VS (i.e. battery voltage). The diagram also shows how the collector currents (i1) and (i2) of the power transistors TR1 and TR2 vary with the load and voltage VS.

## Claims

1. A regulated switch mode DC-DC converter comprising a logic gate package connected to a DC power supply and providing four NOR logic gates, in which two of the NOR gates are connected for providing an oscillator circuit producing one or more AC outputs which are applied to the inputs of the other respective NOR gates which act as driver gates for power transistor means which conducts intermittently in order to provide from the DC power supply a regulated DC output and in which the ON/OFF periods of the power transistor means are controlled by control means in order to provide regulation of the DC output of the converter notwithstanding variations in the voltage of the DC power supply.

2. A regulated switch mode DC-DC converter as claimed in claim 1, in which the oscillator circuit provides two AC outputs in anti-phase which are applied to the respective inputs of the NOR gates the outputs from which drive two power transistors which conduct alternately.

3. A regulated switch mode DC-DC converter as claimed in claim 1 or 2, in which the control means comprises capacitor means arranged to the charged from a feedback circuit from the power transistor means output circuit and connected to the inputs of the NOR gates which act as driver gates for the power transistor means so as to control the switching points of the power transistor means.

4. A regulated switch mode DC-DC converter as claimed in any preceding claim, in which the output circuit from the power transistor means comprises an isolating transformer having one output which is rectified by a full-wave rectifier circuit which provides the regulated DC output of the converter and another output which is rectified by a full-wave rectifier which provide the feedback for charging the capacitor means.

Fig.1.

EP 0 403 088 A2

| X | Y | Z |
|---|---|---|
| 0 | 0 | 1 |
| 0 | 1 | 0 |
| 1 | 0 | 0 |
| 1 | 1 | 0 |

*Fig.2.*

LOAD / VOLTAGE CONDITION

A - OFF LOAD OR
    LIGHT LOAD AT HIGH VOLTS VS

B - RATED LOAD AT HIGH VOLTS VS
    OR LIGHT LOAD AT LOW VOLTS VS

C - RATED LOAD AT LOW VOLTS VS

|   A   |   B   |   C   |   |
|-------|-------|-------|---|

GATE OUTPUT VOLTAGE (G3)

GATE OUTPUT VOLTAGE (G4)

COLLECTOR CURRENT (i1)

COLLECTOR CURRENT (i2)

*Fig.3.*

EP 0 403 088 A2